# EUROPÄISCHE PATENTSCHRIFT

(11) **EP 3 565 754 B1**
(45) Veröffentlichungstag und Bekanntmachung des Hinweises auf die Patenterteilung: **13.10.2021**
(21) Anmeldenummer: 18701110.1
(22) Anmeldetag: 08.01.2018
(51) Int. Cl.: B62D 1/181

(54) **MOTORISCH VERSTELLBARE LENKSÄULE FÜR EIN KRAFTFAHRZEUG**
MOTOR-ADJUSTABLE STEERING COLUMN FOR A MOTOR VEHICLE
COLONNE DE DIRECTION RÉGLABLE PAR MOTEUR POUR VÉHICULE AUTOMOBILE

(30) Priorität: 09.01.2017 DE 102017200213
(43) Veröffentlichungstag der Anmeldung: 13.11.2019
(73) Patentinhaber: thyssenkrupp Presta AG, 9492 Eschen (LI); thyssenkrupp AG, 45143 Essen (DE)
(72) Erfinder: SCHMIDT, René Marco, 9464 Lienz (CH); GOMEZ REDONDO, Samuel, 9493 Mauren (LI)
(74) Vertreter: thyssenkrupp Intellectual Property GmbH
(86) Internationale Anmeldenummer: PCT/EP2018/050373
(87) Internationale Veröffentlichungsnummer: WO 2018/127590

(56) Entgegenhaltungen:
- WO-A1-2013/131608
- DE-A1-102014 104 362
- US-A- 5 419 215
- US-A1- 2004 023 746
- US-A1- 2007 180 945

## Beschreibung

### Stand der Technik

Die Erfindung betrifft eine motorisch verstellbare Lenksäule für ein Kraftfahrzeug, umfassend eine Trageinheit, die an einer Fahrzeugkarosserie anbringbar ist, und von der eine Stelleinheit gehalten ist, in der eine Lenkspindel um eine Längsachse drehbar gelagert ist, und mit einem Verstellantrieb, der mit der Trageinheit und mit der Stelleinheit verbunden ist, wobei der Verstellantrieb eine Antriebseinheit und eine in eine Spindelmutter eingreifende Gewindespindel mit einer Gewindespindelachse aufweist, wobei die Gewindespindel durch die Antriebseinheit rotatorisch oder translatorisch antreibbar ist, wobei die Antriebseinheit mit einem Bauteil der Lenksäule, das gebildet wird durch die Trageinheit, die Stelleinheit oder eine die Stelleinheit haltende und mit der Trageinheit verbundene Manteleinheit, in einer Querrichtung quer zur Gewindespindelachse bewegbar verbunden ist, oder um eine in Querrichtung liegende Achse verschwenkbar verbunden ist.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Stelleinheit drehbar gelagert, die von einer Trageinheit verstellbar gehalten ist. Die Verstellung der Stelleinheit ermöglicht zum einen die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Es ist im Stand der Technik bekannt, zur Verstellung der Stelleinheit relativ zur Trageinheit einen motorischen Verstellantrieb mit einer Antriebseinheit vorzusehen, die in der Regel einen elektrischen Stellmotor umfasst, der über ein Getriebe mit einem Spindeltrieb verbunden ist. Auf der Abtriebsseite der Antriebseinheit, die feststehend mit der Stelleinheit oder der Trageinheit verbunden ist, ist eine Gewindespindel angekuppelt, die um ihre Gewindespindelachse drehend antreibbar ist oder entlang dieser Gewindespindelachse translatorisch verschiebbar ist. Die drehend antreibbare Gewindespindel einer ersten Ausführungsform greift in eine Spindelmutter ein, die an der Stelleinheit bezüglich der Gewindespindelachse feststehend angebracht ist oder in einer zweiten, alternativen Ausführungsform der translatorisch verschiebbaren Gewindespindel greift die Gewindespindel in eine Spindelmutter ein, wobei die Gewindespindel unverdrehbar mit der Stelleinheit gekoppelt ist und die Gewindespindel durch die Rotation der Spindelmutter mittels des elektrischen Stellmotors in Richtung der Gewindespindelachse translatorisch verschiebbar ist und dadurch die Verstellung der Stelleinheit realisiert ist. Der Spindeltrieb bildet einen zwischen Trageinheit und Stelleinheit wirksamen motorischen Verstellantrieb, durch den die Stelleinheit zur Verstellung relativ zur Trageinheit verstellt werden kann.

Eine möglichst hohe Steifigkeit und Eigenfrequenz der Verstellanordnung aus Trag- und Stelleinheit kann dadurch realisiert werden, dass die Stelleinheit von der Trageinheit mit geringem Spiel zwangsgeführt wird. Die Anordnung der Gewindespindel des Verstellantriebs zwischen Trag- und Stelleinheit ermöglicht zwar die Einleitung einer Verstellkraft, führt jedoch zur einem mechanisch überbestimmten System. Dabei bewirken bereits geringe Abweichungen von einer exakten Anordnung zu Zwangszuständen, bei denen unerwünschte Querkräfte im Spindeltrieb und in den Lagerungen auftreten. Derartige Zwangszustände, die zu verringerter Laufruhe und erhöhtem Verschleiß führen, sind selbst unter Berücksichtigung der üblicherweise geltenden Fertigungstoleranzen nicht vermeidbar.

Um Fertigungstoleranzen auszugleichen, wird im Stand der Technik in der US 2016/0252133 A1 beschrieben, die Stelleinheit innerhalb einer Manteleinheit quer zur Längsachse federnd einzuspannen, wobei die Manteleinheit von einer Trageinheit getragen ist. Dadurch kann sich die Stelleinheit beim Verstellen in Längsrichtung quer zur Längsachse verlagern, und dadurch eventuell auftretende Winkelfehler zwischen der Gewindespindelachse der Gewindespindel und der Längsachse ausgleichen. Mögliche Zwangskräfte werden dadurch zwar verringert, ein unvermeidlicher Nachteil ist jedoch, dass die Steifigkeit und die Eigenfrequenz der aus Stell- und Manteleinheit gebildeten Teleskop-anordnung in nicht akzeptabler Weise verringert wird.

Aus der US 2007/0180945 A1 ist eine Lenksäule der eingangs genannten Art bekannt, bei der die Antriebseinheit mit der Trageinheit um eine in Querrichtung liegende Achse verschwenkbar verbunden ist. Nachteilig sind dabei ebenfalls die hohen Toleranzanforderungen. Eine Lenksäule, bei der die Antriebseinheit in einer Querrichtung quer zur Gewindespindelachse bewegbar ist, wird in der WO 2013/131608 A1 beschrieben. Als zutreffender Stand der Technik ist ebenfalls das Dokument US2004/023746 zu betrachten. Angesichts der vorangehend erläuterten Problematik ist es eine Aufgabe der vorliegenden Erfindung, eine Lenksäule mit einem verbesserten Verstellantrieb zur Verfügung zu stellen, welcher bei geringeren Toleranzanforderungen eine möglichst hohe Steifigkeit gewährleistet.

### Darstellung der Erfindung

Diese Aufgabe wird durch eine motorisch verstellbare Lenksäule für ein Kraftfahrzeug mit den Merkmalen des Anspruchs 1 oder des Anspruchs 2 gelöst. Vorteilhafte Weiterbildungen ergeben sich aus den Unteransprüchen.

Erfindungsgemäß wird für eine gattungsgemäße Lenksäule mit den eingangs genannten Merkmalen vorgeschlagen, dass die Antriebseinheit relativ zu dem Bauteil im Wesentlichen senkrecht quer zur Gewindespindelachse und quer zur Längsachse linear verschiebbar ist.

Für eine gattungsgemäße Lenksäule mit den eingangs genannten Merkmalen vorgeschlagen, dass alternativ oder zusätzlich die Antriebseinheit mit einem Bauteil der Lenksäule, das gebildet wird durch die Trageinheit, die Stelleinheit oder eine die Stelleinheit haltende und mit der Trageinheit verbundene Manteleinheit, um eine in einer Querrichtung quer zur Gewindespindelachse bewegbar verbunden ist oder um eine in Querrichtung liegende Achse verschwenkbar verbunden ist, wobei erfindungsgemäß vorgesehen ist, dass die Antriebseinheit relativ zu dem Bauteil im Wesentlichen senkrecht quer zur Gewindespindelachse und quer zur Längsachse linear verschiebbar ist.

Das Bauteil der Lenksäule, mit dem die Antriebseinheit verbunden ist, kann die Trageinheit oder eine Manteleinheit oder die Stelleinheit darstellen.

Für die Realisierung der erfindungsgemäßen Lösung für eine Teleskopverstellung wird eine motorisch verstellbare Lenksäule für ein Kraftfahrzeug vorgeschlagen, umfassend eine Manteleinheit, die an einer mit einer Fahrzeugkarosserie verbindbaren Trageinheit angebracht ist, und von der eine Stelleinheit gehalten ist, in der eine Lenkspindel um eine Längsachse drehbar gelagert ist, und mit einem Verstellantrieb, der mit der Manteleinheit und mit der Stelleinheit verbunden ist, und von dem die Stelleinheit relativ zur Manteleinheit axial bezüglich der Längsachse teleskopierend ein- und ausschiebbar ist, wobei der Verstellantrieb eine mit der Manteleinheit verbundene Antriebseinheit und eine in eine Spindelmutter eingreifende Gewindespindel mit einer Gewindespindelachse aufweist, wobei die Gewindespindel durch die Antriebseinheit rotatorisch oder translatorisch antreibbar ist.

Die Antriebseinheit ist an einem Bauteil, der Manteleinheit, in einer Querrichtung quer zur Gewindespindelachse bewegbar verbunden.

Der Verstellantrieb ist somit gemäß dem Oberbegriff des Patentanspruchs 1 unter der Zwischenschaltung der Manteleinheit mit der Trageinheit verbunden, wobei die relative Verstellung der Stelleinheit gegenüber der Manteleinheit gleichzeitig eine relative Verstellung der Stelleinheit gegenüber der Trageinheit darstellt. Wie die Realisierung der Teleskopverstellung zeigt, kann es vorgesehen sein, dass zwischen der Stelleinheit und der Trageinheit weitere Bauteile angeordnet sind, beispielsweise eine Manteleinheit. Weiterhin können noch weitere Manteleinheiten zur Darstellung eines Mehrfachteleskops in Form von mehreren Mantelrohren vorgesehen sein.

Die Antriebseinheit ist erfindungsgemäß relativ zur Manteleinheit bzw. zur Trageinheit, und damit relativ zu der darin mit geringem Spiel gelagerten Stelleinheit variabel positionierbar, und zwar quer zur Gewindespindelachse, welche die Verstellrichtung bei der teleskopierenden Verstellung vorgibt. Bevorzugt ist die Antriebseinheit im Wesentlichen senkrecht quer zur Gewindespindelachse und quer zur Längsachse linear verschiebbar. Auf diese Weise wird ein zusätzlicher Freiheitsgrad der Relativbewegung zwischen der Gewindespindel der Antriebseinheit und der an der Stelleinheit angebrachten Spindelmutter bzw. der mit der Stelleinheit verbundenen Gewindespindel realisiert. Indem sich die Antriebseinheit zusammen mit der rotierbaren Gewindespindel oder zusammen mit der rotierbaren Spindelmutter in Richtung auf die Stelleinheit zu oder von der Stelleinheit weg bewegen kann, können durch Bauteile- und Fertigungstoleranzen bedingte Abweichungen von der parallelen Ausrichtung der Gewindespindelachse der Gewindespindel zur Längsachse der Lenkspindel ausgeglichen werden. Insbesondere können durch die Bewegung der Antriebseinheit Fehlstellungen der Gewindespindel relativ zu der Kopplung mit der Stelleinheit kompensiert werden.

Zusätzlich zur linearen Verschiebbarkeit quer zur Gewindespindelachse und quer zur Längsachse die Antriebseinheit kann die Antriebseinheit mit einem Bauteil der Lenksäule, das gebildet wird durch die Trageinheit, die Stelleinheit oder eine die Stelleinheit haltende und mit der Trageinheit verbundene Manteleinheit, um eine in Querrichtung liegende Achse verschwenkbar verbunden sein. Dadurch kann die Gewindespindelachse relativ zur Längsachse verkippt bzw. verschwenkt werden zum Ausgleich von durch Fertigungstoleranzen und im Betrieb wirkenden Zwangskräften auftretenden Verformungen relativ zur Trag-, Stell- oder Manteleinheit. Eine Verschwenkbarkeit um eine in Querrichtung liegende Achse und eine lineare Bewegbarkeit in Querrichtung können je nach den Anforderungen einzeln oder in Kombination realisiert werden.

Für die Realisierung der erfindungsgemäßen Lösung für eine Höhenverstellung wird eine motorisch verstellbare Lenksäule für ein Kraftfahrzeug vorgeschlagen, umfassend eine Manteleinheit, die an einer mit einer Fahrzeugkarosserie verbindbaren Trageinheit angebracht ist und von der eine Lenkspindel um eine Längsachse drehbar getragen ist, und mit einem Verstellantrieb, der mit der Manteleinheit und mit der Trageinheit verbunden ist, und von dem die Manteleinheit relativ zur Trageinheit verschwenkbar ist, wobei der Verstellantrieb eine mit der Manteleinheit verbundene Antriebseinheit und eine in eine Spindelmutter eingreifende Gewindespindel mit einer Gewindespindelachse aufweist, wobei die Gewindespindel durch die Antriebseinheit rotatorisch oder translatorisch antreibbar ist. Erfindungsgemäß ist die Antriebseinheit an einem Bauteil, der Trageinheit, in einer Querrichtung quer zur Gewindespindelachse bewegbar verbunden.

Der Verstellantrieb ist somit gemäß dem Oberbegriff des Patentanspruchs 1 mit der Trageinheit verbunden, wobei die relative Verstellung in Form einer Verschwenkung der Manteleinheit gegenüber der Trageinheit gleichzeitig eine relative Verstellung der in der Manteleinheit aufgenommenen Stelleinheit gegenüber der Trageinheit darstellt. Wie die Realisierung der Verschwenkverstellung (Höhenverstellung) zeigt, kann es vorgesehen sein, dass zwischen der Stelleinheit und der Trageinheit weitere Bauteile angeordnet sind, beispielsweise eine Manteleinheit. Weiterhin können noch weitere Manteleinheiten zur Darstellung eines Mehrfachteleskops vorgesehen sein.

Im Betrieb kann die Antriebseinheit durch die zwischen Gewindespindel und Spindelmutter aufgrund einer eventuellen Fehlstellung wirkenden Querkräfte so weit in Querrichtung ausgelenkt werden, dass die Gewindespindel koaxial ausgerichtet in die Spindelmutter eingreift. Dadurch wird die Laufruhe des Spindeltriebs beim Verstellen erhöht und Verschleiß reduziert.

Die erfindungsgemäße bewegbare Lagerung kann dadurch realisiert werden, dass die Antriebseinheit einen Lagerabschnitt aufweist, der in einem Schiebelager gelagert ist. Das Schiebelager kann eine Führungseinrichtung aufweisen, in der die Antriebseinrichtung gehalten und in Querrichtung relativ zur Gewindespindelachse linear verschiebbar ist, beispielsweise in Form eines linearen Gleitlagers. Die Antriebseinheit kann in der Führungseinrichtung mit einem Lagerabschnitt aufgenommen sein, der ausgestaltet ist, um in dem Schiebelager in Querrichtung verschieblich gelagert zu werden. Beispielsweise kann der Lagerabschnitt Gleitflächen aufweisen, die auf korrespondierenden Lagerflächen des Schiebelagers quer zur Gewindespindelachse entlanggleiten können, und zwar in Richtung auf das Bauteil, mit dem die Antriebseinheit verbunden ist beispielsweise die Manteleinheit oder die Trageinheit, zu oder davon weg. Die Gleitflächen können auch auf gegenüberliegenden Seiten des Lagerabschnitts angeordnet sein, so dass der Lagerabschnitt zwischen gegenüberliegenden Lagerflächen des Schiebelagers nach Art einer Kulissenführung zwangsgeführt ist. Dadurch wird die Antriebseinheit in Richtung der Gewindespindelachse, also quer zur Querrichtung, in Position gehalten, wodurch die Steifigkeit der Anordnung erhöht wird und Vibrationen im Betrieb reduziert werden.

Eine vorteilhafte Ausführung der Erfindung sieht vor, dass die Antriebseinheit von zumindest einem Federelement in Querrichtung federbelastet ist. Zumindest ein Federelement ist dabei so angeordnet, dass es sich an dem Bauteil, mit dem die Antriebseinheit verbunden ist, beispielsweise der Manteleinheit oder der Trageinheit, oder einem mit dem Bauteil verbundenen Widerlager abstützt und eine Federkraft auf die Antriebseinheit in Richtung dessen erfindungsgemäßer Bewegbarkeit quer zur Gewindespindelachse ausübt. Von zumindest einem Federelement kann die Antriebseinheit beispielsweise in Richtung auf die Längsachse zu, also von außen gegen das Bauteil, beispielsweise die Manteleinheit bzw. die darin aufgenommene Stelleinheit oder der Trageinheit, federbelastet sein. Kommt es aufgrund der genannten Bauteil- und Fertigungstoleranzen beim Verstellen der Stelleinheit zu einer Verlagerung der daran befestigten Spindelmutter oder der daran befestigten Gewindespindel bezüglich der Gewindespindelachse in Querrichtung, d.h. radial nach außen, wird die Gewindespindel und damit zusammen die Antriebseinheit gegen die nach innen gerichtete Federkraft ebenfalls in Querrichtung nach außen bewegt. Durch die Federvorspannung wird die Antriebseinheit in Querrichtung elastisch gehalten und gestützt, so dass Geräuschentwicklung und Vibrationen im Betrieb zuverlässig unterdrückt werden. Das oder die Federelemente können beispielsweise an einem Lagerabschnitt angreifen, der in einem oben beschriebenen Schiebelager querverschieblich gelagert ist.

Es kann ebenfalls vorteilhaft sein, dass die Antriebseinheit zwischen zwei Federelementen federnd eingespannt ist. Dabei wirkt das eine Federelement - wie vorangehend beschrieben - von außen in Richtung auf die Längsachse zu, und das zweite Federelement übt eine dem ersten Federelement entgegengesetzte Federkraft auf die Antriebseinheit aus. Hierzu kann das zweite Federelement beispielsweise von der Längsachse aus nach außen gesehen zwischen dem Bauteil, beispielsweise der Manteleinheit oder der Trageinheit, und der Antriebseinheit eingesetzt sein, so dass es sich außen gegen das Bauteil, beispielsweise gegen die Manteleinheit oder gegen die Trageinheit, abstützt und eine in Querrichtung nach außen gerichtete Federkraft auf einen Lagerabschnitt der Antriebseinheit ausübt. In dieser Anordnung wird die Antriebseinheit in einer Mittelstellung zwischen den gegeneinander wirkenden Federelementen gehalten, und kann sich zum Ausgleich von toleranzbedingten Fehlorientierungen in beide Richtungen quer zur Gewindespindelachse sowohl auf das Bauteil, mit dem die Antriebseinheit verbunden ist, zu als auch davon weg bewegen. Dadurch können jegliche denkbare Zwangszustände zuverlässig vermieden werden.

An dem Bauteil, beispielsweise der Manteleinheit oder der Trageinheit, kann ein Halteelement angeordnet sein, an dem die Antriebseinheit zumindest in Querrichtung abgestützt ist. Das Halteelement kann beispielsweise in Form eines Haltebügels ausgebildet sein, welcher die Antriebseinheit, beispielsweise einen Lagerabschnitt der Antriebseinheit, von außen umgreift, so dass die Antriebseinheit in Querrichtung abgestützt ist. Dadurch wird die Antriebseinheit von außen an dem Bauteil, beispielsweise der Manteleinheit oder der Trageinheit fixiert, und die erfindungsgemäße Beweglichkeit der Antriebseinheit in Querrichtung kann von dem Halteelement nach außen hin begrenzt werden. Von dem Halteelement aus kann weiterhin eine Federkraft in Querrichtung nach innen in Richtung der erfindungsgemäßen Bewegbarkeit auf die Längsachse zu ausgeübt werden.

Das Halteelement kann integral mit dem Bauteil, mit dem die Antriebseinheit verbunden ist, beispielsweise der Manteleinheit oder der Trageinheit, ausgebildet sein. Eine vorteilhafte Ausführung sieht vor, dass das Halteelement als Haltebügel ausgebildet ist, der mittels Befestigungselementen an dem Bauteil befestigt wird. Dadurch kann die Montage der Antriebseinheit an dem Bauteil erleichtert werden.

Zur Realisierung der vorangehend beschriebenen Federbelastung kann dadurch erfolgen, dass zwischen dem Halteelement und der Antriebseinheit und/oder zwischen der Antriebseinheit und dem Bauteil mindestens ein Federelement angeordnet ist. Durch ein zwischen dem Halteelement in dem Bereich, in dem es die Antriebseinheit beispielsweise an einem Lagerabschnitt bezüglich der Längsachse von außen umgreift, und der Antriebseinheit eingesetztes Federelement kann eine Federkraft ausgeübt werden, welche die Antriebseinheit von außen quer gegen die Manteleinheit andrückt, also vorspannt. Das Federelement kann entsprechend als Druckfeder ausgebildet sein, welche sich mit einem Ende gegen ein Widerlager an dem Haltebügel abstützt, und mit dem anderen Ende gegen die Antriebseinheit, beispielsweise im Bereich eines Lagerabschnitts. Dadurch kann bereits eine einseitige Vorspannung der mit der Antriebseinheit verbundenen Gewindespindel in Querrichtung gegen die mit der Stelleinheit verbundene Spindelmutter bzw. der mit der Stelleinheit verbundene Gewindespindel realisiert werden. Dadurch, dass zwischen der gegenüberliegenden Seite der Antriebseinheit, beispielsweise auf der gegen die Längsachse weisenden Innenseite des Lagerabschnitts, und der Außenweite der Manteleinheit ein zweites Federelement angeordnet wird, kann die Antriebseinheit wie oben beschrieben zwischen zwei Federelementen in Querrichtung elastisch eingespannt werden.

Das Halteelement kann eine Lagerfläche aufweisen, auf der ein Lagerabschnitt der Antriebseinheit bevorzugt mit einer Gleitfläche anliegt und dadurch in Querrichtung verschieblich gelagert und geführt ist. Eine korrespondierende Lagerfläche kann der Lagerfläche des Halteelements gegenüberliegend an dem Bauteil angeordnet sein. Die Antriebseinheit kann zwischen diesen beiden gegenüberliegenden Lagerflächen querverschieblich geführt sein.

Das oder die Federelemente können beispielsweise als flache Druckfedern ausgebildet sein, beispielsweise als ringförmig konische oder kalottenförmige Tellerfedern. In einer bevorzugten Weiterbildung können mehrere Tellerfedern vorgesehen sein, die in einem Tellerfederpaket angeordnet sind.

Es ist möglich, dass das Halteelement als federelastischer Haltebügel ausgebildet ist. Dabei wird anstelle eines separaten Federelements das Haltelement in sich elastisch ausgestaltet, beispielsweise durch Realisierung eines biegeelastischen Schenkels oder Vorsprungs. Mit dem elastischen Teil kann der Haltebügel eine Federkraft auf die Antriebseinheit ausüben, beispielsweise als Vorspannkraft quer in Richtung auf die Längsachse zu. Hierzu kann der Haltebügel aus einem elastischen Material gefertigt sein, beispielsweise aus Federstahl. Ein Vorteil des federelastischen Haltebügels ist, dass ein separates Federelement eingespart wird, wodurch die Fertigung und Montage vereinfacht wird.

In Kombination mit dem federnden Haltebügel kann zwischen der dem Haltebügel abgewandten Innenseite der Antriebseinheit und der dieser gegenüberliegenden Außenseite des Bauteils, beispielsweise der Manteleinheit oder der Trageinheit, ein zweites Federelement angeordnet sein. Dadurch kann die Antriebseinheit beispielsweise wie vorangehend beschrieben zwischen den beiden Federelementen in beide Richtungen querverschieblich elastisch eingespannt sein.

Eine vorteilhafte Weiterbildung der Erfindung sieht vor, dass das Halteelement einen vorstehenden Haltevorsprung aufweist, der in eine Haltevertiefung der Antriebseinheit eingreift. Der Haltevorsprung kann bevorzugt in Form eines Haltezapfens ausgestaltet sein, der sich von dem Halteelement bezüglich des Bauteils von außen in Querrichtung gegen die Antriebseinheit erstreckt, bevorzugt gegen einen Lagerabschnitt der Antriebseinheit. Das Halteelement kann beispielsweise einen zylindrischen oder mehreckigen Querschnitt haben, der in eine nach außen offene, korrespondierende Halteöffnung oder -vertiefung in der Antriebseinheit beispielsweise in einem Lagerabschnitt eingreift, beispielsweise formschlüssig oder in einem losen Formschluss.

Auf der dem Halteelement gegenüberliegenden Seite kann an dem Bauteil der Lenksäule ein gleichartiger Haltevorsprung angeordnet, der ebenfalls in Form eines Haltezapfens ausgestaltet sein kann, der von der Manteleinheit nach außen vorsteht. Dieser kann ebenfalls in eine Halteöffnung oder -vertiefung der Antriebseinheit eingreifen.

Durch das Zusammenwirken mindestens eines Haltevorsprungs mit einer korrespondierenden Haltevertiefung oder -öffnung kann die Antriebseinheit in Längsrichtung an dem einen Bauteil der Lenksäule fixiert werden, und die durch den Spindeltrieb auf die in Richtung der Gewindespindelachse der Gewindespindel beim Verstellen der Lenksäule ausgeübte Verstellkraft wird über den oder die Haltevorsprünge an der Manteleinheit oder Trageinheit abgestützt.

Es ist ebenfalls denkbar und möglich, dass die Antriebseinheit, bevorzugt im Bereich eines Lagerabschnitts, einen in Querrichtung vorstehenden Haltevorsprung aufweist, der in eine Haltevertiefung des Halteelements und/oder des Bauteils eingreift. Der oder die Haltevorsprünge an der Antriebseinheit dienen wie die vorangehend beschriebenen Haltevorsprünge an dem Halteelement zur Befestigung der Antriebseinheit und zur Abstützung des Spindeltriebs in Richtung der Gewindespindelachse an dem Bauteil der Lenksäule, mit dem die Antriebseinheit verbunden ist.

Ein als Tellerfeder ausgebildetes ringförmiges Federelement kann auf dem Haltevorsprung angeordnet sein. Eine derartige Tellerfeder ist ein konischer oder kalottenförmiger Ring aus federelastischem Material, in der Regel Federstahl, der als Druckfeder in axialer Richtung komprimierbar ist. Mindestens eine, bevorzugt genau eine Tellerfeder kann auf einen bevorzugt als Haltezapfen ausgebildeten Haltevorsprung an der Halteelement aufgesteckt werden, so dass sie sich mit einer axialen Stirnseite an dem Haltevorsprung abstützt und mit ihrer axial gegenüberliegenden Stirnseite federbelastet gegen die Antriebseinheit anliegt, bevorzugt im Bereich eines Lagerabschnitts. Um eine beidseitige federnde Einspannung zu realisieren, kann zusätzlich auch auf einem Haltezapfen an dem Bauteil mit dem die Antriebseinheit verbunden ist eine Tellerfeder angebracht sein, die sich mit einer Stirnseite von außen an dem Bauteil abstützt und mit ihrer anderen Stirnseite federbelastet von innen gegen die Antriebseinheit anliegt. Dann ist der Lagerabschnitt zwischen den Tellerfedern querverschieblich elastisch eingespannt.

Eine alternative Ausführung kann dadurch realisiert werden, dass der Haltevorsprung federnd ausgebildet ist. Eine in Querrichtung in sich federnde Ausgestaltung kann beispielsweise durch in den Haltevorsprung eingesetzte oder in diesem integriert ausgebildete Federelemente realisiert werden. Dadurch kann das freie Ende eines von dem Halteelement, dem Bauteil, mit dem die Antriebseinheit verbunden ist oder auch der Antriebseinheit vorstehenden Haltevorsprungs elastisch in Querrichtung gegen das Halteelement, das Bauteil, mit dem die Antriebseinheit verbunden ist oder entsprechend verformt werden. Der Haltevorsprung kann durch eine entsprechende Formgebung, beispielsweise durch schmale Federzungen, an einem ansonsten starren Halteelement integral realisiert werden. Durch die Anordnung eines oder mehrerer federnder Haltevorsprünge kann die Antriebseinheit einseitig federbelastet werden, oder auch beidseitig federnd eingespannt.

Alternativ oder zusätzlich zur Anordnung an dem Halteelement oder dem Bauteil der Lenksäule, mit dem die Antriebseinheit verbunden ist, kann vorgesehen sein, dass an der Antriebseinheit mindestens ein Haltevorsprung angeordnet ist. Dieser kann ein einfacher Haltezapfen sein, auf dem ein bevorzugt ringförmiges Federelement angebracht ist, oder auch ein Haltevorsprung mit einem integrierten Federelement.

Die vorangehend beschriebenen Möglichkeiten, eine Federkraft in Querrichtung auf die Antriebseinheit auszuüben, können einzeln realisiert werden, oder in Kombination eingesetzt. So ist es beispielsweise denkbar und möglich, einen federnden Haltebügel, oder einen starren Haltebügel mit einem federnden Halteelement, einen außenseitig an der Antriebseinheit angeordneten federnden Haltevorsprung, oder einen Haltevorsprung mit aufgesetztem ringförmigen Federelement einzeln einzusetzen, oder mit entsprechenden federnden Halteanordnungen auf der gegenüberliegenden Innenseite zwischen Antriebseinheit und dem Bauteil der Lenksäule, beispielsweise der Manteleinheit oder der Trageinheit, zu kombinieren.

Der Haltevorsprung kann kalottenartig konvex gerundet ausgebildet sein. Dabei ist die freie, stirnseitige Endfläche, mit welcher ein an dem Halteelement oder dem Bauteilangeordneten Haltevorsprung gegen die Antriebseinheit anliegt, oder ein an der Antriebseinheit angeordneter Haltevorsprung gegen das Halteelement oder dem Bauteil anliegt, im Wesentlichen kugelförmig abgerundet. Dadurch erhält der Haltevorsprung einen kalottenförmigen Gelenkkopf, oder ist selbst als eine Art Kugelkopf geformt, so dass zwischen Antriebseinheit und Halteelement bzw. Manteleinheit eine Gelenkanordnung realisiert wird. Dabei kann durch die kugel- oder kalottenförmige Rundung ein Winkelversatz zu einer exakt kolinearen Ausrichtung der Haltevorsprünge und der damit zusammenwirkenden Gegenflächen bzw. Haltevertiefungen ausgeglichen werden. Der kalottenförmige Haltevorsprung kann bevorzugt mit einer als korrespondierende Gelenkpfanne ausgebildeten Haltevertiefung zusammenwirken. Diese kann einfach dadurch realisiert werden, dass ein kugelsegmentförmiger Haltevorsprung am kreisrunden Rand einer Haltevertiefung anliegt, die als zylindrische Bohrung ausgebildet ist. Selbst bei einem Winkelversatz bleibt eine linienförmige, wackelfreie Anlage zwischen Haltevorsprung und Haltevertiefung gewährleistet. Um die Anlagefläche zu vergrößern, kann die Haltevertiefung ganz oder teilweise konkav ausgebildet sein, mit derselben kugelförmigen Rundung wie der Haltevorsprung, so dass die Haltevertiefung eine Art Gelenkpfanne bildet. Dadurch wird eine Art Kugelgelenk gebildet, bei dem der Haltevorsprung in der Haltevertiefung zum Ausgleich von Winkelversatz, bevorzugt zur Ausbildung einer Schwenkachse, die mit der Querrichtung zusammen fällt, geneigt werden kann, ohne dass die Haltewirkung beeinträchtigt wird.

Der kugel- oder kalottenförmig gerundete Haltevorsprung kann in sich federnd ausgebildet sein, oder durch die federnde Ausgestaltung des Halteelements, oder auch durch ein anderes, auf das Halteelement wirkendes Federelement. Als Federelement kann alternativ ― wie oben beschrieben ― eine ringförmige Tellerfeder auf dem als Haltezapfen geformten Haltevorsprung koaxial angebracht, d.h. aufgesteckt werden. Die Tellerfeder hat bevorzugt einen konisch zusammenlaufenden oder kalottenartig gewölbten Querschnitt, so dass sie auf ihrer ersten Stirnseite einen kleineren Durchmesser und auf der axial gegenüberliegenden Stirnseite einen größeren Durchmesser hat. Die Tellerfeder wird so auf dem Haltevorsprung angeordnet, dass das zusammenlaufende Ende mit dem kleineren Durchmesser in axialer Richtung des Haltevorsprungs ausgerichtet ist. Dadurch umgibt die Tellerfeder mit ihrem kleineren Durchmesser umlaufend das kugel- bzw. kalottenförmig gerundete Ende des Haltevorsprungs, und stützt sich federnd an der dort gegenüberliegenden Außenseite des Lagerabschnitts der Antriebseinheit ab, oder auch an dem Halteelement, falls der Haltevorsprung von der Antriebseinheit vorsteht. Dadurch ist sichergestellt, dass auch bei einem Winkelversatz das Federelement mit beiden Stirnseiten optimal an den erfindungsgemäß in Querrichtung federbelasteten Komponenten ― Halteelement, Antriebseinheit und/oder dem Bauteil mit dem die Antriebseinheit verbunden ist ― umlaufend anliegt.

Es ist vorteilhaft, dass das Halteelement als Blechformteil ausgebildet ist. Ein Blechformteil kann als Stanz-Press-Biege-Teil rationell gefertigt werden. Durch die Wahl geeigneter Materialien, bevorzugt gut kalt umformbarer Stahl mit geeigneten Materialeigenschaften, kann. beispielsweise ein Haltevorsprung oder -zapfen als einstückige Ausformung ausgebildet werden. Dabei kann durch die Formgebung und die elastischen Eigenschaften das Halteelement in sich federnd gestaltet werden. Durch Einformung von Kanten oder Sicken kann die Stabilität und Biegesteifigkeit an anderer Stelle gezielt erhöht werden. Somit kann die Anzahl zusätzlicher Bauteile wie Federelemente, Halteelemente und dergleichen reduziert werden, was der Montagefreundlichkeit und einer rationellen Fertigung dient.

Um die Antriebseinheit mit einem Bauteil der Lenksäule, das gebildet wird durch die Trageinheit, die Stelleinheit oder eine die Stelleinheit haltende und mit der Trageinheit verbundene Manteleinheit, um eine in Querrichtung liegende Achse verschwenkbar zu verbinden, kann die in Querrichtung liegende Achse bevorzugt durch das Halteelement und/oder den Haltevorsprung verlaufen. Dadurch ist die Antriebseinheit in die durch das Halteelement und/oder den Haltevorsprung definierte Querrichtung linear bewegbar, und um das Halteelement und/oder den Haltevorsprung verschwenkbar gelagert. Dadurch wird in vorteilhafter Weise der Freiheitsgrad der Antriebseinheit zur Ausgleich von Zwangsstellungen erweitert. Die Schwenkachse kann durch das Haltelement und/oder der Haltevorsprung gebildet sein.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: die Lenksäule gemäß Figur 1 in einer schematischen perspektivischen Ansicht von der gegenüberliegenden Seite,
- Figur 3: eine Teilansicht der Lenksäule gemäß Figur 1 in auseinander gezogenem Zustand,
- Figur 4: eine Teilansicht eines Querschnitts quer zur Längsachse durch eine Lenksäule gemäß Figur 1 bis 3,
- Figur 5: eine vergrößerte Ausschnittansicht aus Figur 4,
- Figur 6: eine vergrößerte Ausschnittansicht wie in Figur 5 einer zweiten Ausführungsform einer Lenksäule,
- Figur 7: eine vergrößerte Ausschnittansicht wie in Figur 5 einer dritten Ausführungsform einer Lenksäule,
- Figur 8: eine vergrößerte Ausschnittansicht wie in Figur 5 einer vierten Ausführungsform einer Lenksäule,
- Figur 9: eine vergrößerte Ausschnittansicht wie in Figur 5 einer fünften Ausführungsform einer Lenksäule,
- Figur 10: ein Halteelement einer Lenksäule gemäß Figur 9 in einer perspektivischen Ansicht,
- Figur 11: eine Teilansicht der Lenksäule gemäß Figur 2 in auseinander gezogenem Zustand,
- Figur 12: eine Verstelleinheit in einer alternativen Ausführung mit einer translatorisch bewegbaren Gewindespindel im Längsschnitt,
- Figur 13: eine Teilansicht der Verstelleinheit gemäß Figur 12 in einem Querschnitt.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

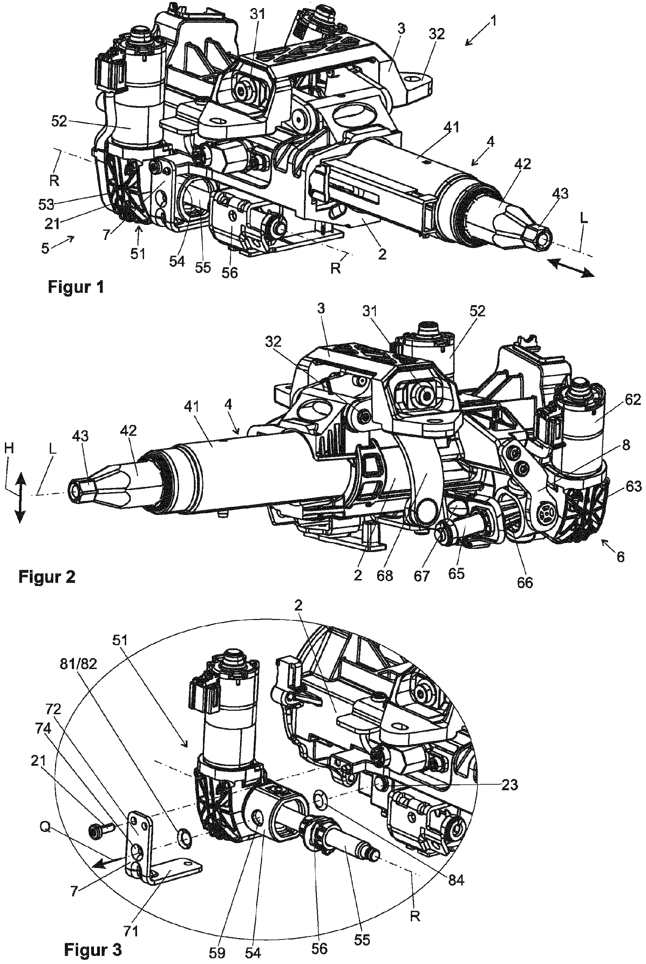

Figuren 1 und 2 zeigen eine erfindungsgemäße Lenksäule 1 in schematischen perspektivischen Ansichten von seitlich oben schräg links (Figur 1) bzw. schräg rechts (Figur 2) auf das hintere Ende, bezogen auf die Fahrtrichtung eines nicht dargestellten Fahrzeugs.

Die Lenksäule 1 umfasst eine Manteleinheit 2, die um eine waagerecht quer zur Längsachse L liegende Schwenkachse 31 an einer Trageinheit 3 angebracht ist, die als Konsolenteile ausgebildete Befestigungsmittel 32 aufweist zur Verbindung mit einer nicht dargestellten Kraftfahrzeug-Karosserie.

Von der Manteleinheit 2 wird eine Stelleinheit 4 gehalten, die ein inneres Mantelrohr 41 umfasst, in der um eine Längsachse L drehbar eine Lenkspindel 42 gelagert ist. An dem bezüglich der Fahrtrichtung hinteren Ende ist die Lenkspindel 42 mit einem Befestigungsabschnitt 43 zur Anbringung eines hier nicht dargestellten Lenkrads versehen. Die Stelleinheit 4 ist relativ zur Manteleinheit 2 in Richtung der Längsachse L, also in Längsrichtung, axial teleskopierend ein- und ausschiebbar, was in den Figuren 1 und 2 mit dem Doppelpfeil angedeutet ist.

Eine Verstelleinheit 5 umfasst eine Antriebseinheit 51 mit einem Stellmotor 52, der als elektrischer Motor, bevorzugt einem elektrischen Gleichstrommotor, ausgebildet ist, und einem damit gekuppelten Getriebe 53. In dieser Ausführungsform ist das Getriebe 53 als Schneckenradgetriebe ausgebildet, wobei eine Schnecke drehfest mit einer Rotorwelle des elektrischen Motors verbunden, wobei die Schnecke in die Verzahnung eines Schneckenrads eingreift, wobei das Schneckenrad drehfest mit der Gewindespindel 55 verbunden ist. Die Antriebseinheit 51 weist einen Lagerabschnitt 54 auf, über den sie erfindungsgemäß an der Manteleinheit 2 angebracht ist, wie weiter unten noch im Einzelnen erläutert wird.

Von der Antriebseinheit 51 ist eine am Ausgang des Getriebes 53 angekuppelte Gewindespindel 55 um ihre Gewindespindelachse R drehend antreibbar, die sich im Wesentlichen in Richtung der Längsachse L erstreckt. Die Gewindespindel 55 greift in eine Spindelmutter 56 ein, die bezüglich der Gewindespindelachse R drehfest, in Richtung der Längsachse L fest mit der Stelleinheit 4 verbunden ist. Dadurch wird ein Spindeltrieb gebildet, bei dem eine Drehung der Gewindespindel 54 mittels des Stellmotors 52 zu einer Verlagerung der Spindelmutter 56 in Richtung der Gewindespindelachse R erfolgt, und die mit der Spindelmutter 56 verbundene Stelleinheit 4 je nach Drehrichtung in Richtung der Längsachse L in die Manteleinheit 2 eingefahren oder daraus ausgefahren wird.

Eine zweite Verstelleinheit 6 ist an der Manteleinheit 2 mittels eines Halteelements 8 befestigt. Wie die erste Verstelleinheit 5 weist die Verstelleinheit 6 eine Antriebseinheit 61 mit einem elektrischen Motor 62, einem Getriebe 63, welches ebenfalls als Schneckengetriebe ausgebildet ist, und einer drehend antreibbaren Gewindespindel 65 auf, die in eine Spindelmutter 66 eingreift. Die Spindelmutter 66 ist drehfest an einem Ende eines Stellhebels 67 angebracht, der mit seinem anderen Ende gelenkig an einem Kipphebel 68 mit der Manteleinheit 2 verbunden ist. Der Kipphebel 68 ist gelenkig durch ein erstes Gelenk 31 mit der Trageinheit 3 gekoppelt, wobei das erste Gelenk 31 einen Längenausgleich vorsieht. Ein zweites Gelenk 32 ist zwischen dem Kipphebel 68 und der Manteleinheit 2 vorgesehen. Durch Drehung der Gewindespindel 65 wird die Spindelmutter 66 und damit der Stellhebel 67 und somit das eine Ende des Kipphebels 68 verlagert, so dass die Manteleinheit 2 relativ zur Trageinheit 3 um eine Schwenkachse verschwenkt wird, wobei die Stelleinheit 4 zusammen mit der Manteleinheit 2 in Höhenrichtung H relativ zur Trageinheit 3 verstellbar ist, wie in Figur 2 mit dem Doppelpfeil angedeutet. Dadurch wird mittels der Verstelleinheit 6 eine motorische Höhenverstellung eines an dem Befestigungsabschnitt 43 angebrachten Lenkrads (nicht dargestellt) ermöglicht.

Figur 3 zeigt eine Detailansicht der Antriebseinheit 51, die in einer Explosionsdarstellung schematisch in einer Querrichtung Q bezüglich der Gewindespindelachse R und in diesem Ausführungsbeispiel bezüglich der Längsachse L von der Manteleinheit 2 aus nach außen auseinander gezogen dargestellt ist. Die Manteleinheit 2 entspricht dem Bauteil der Lenksäule, mit dem die Antriebseinheit 51 verbunden ist. Die Querrichtung Q steht senkrecht zur Gewindespindelachse R und in diesem dargestellten Ausführungsbeispiel senkrecht Längsachse L, wobei durch den Pfeil in Figur 3 die Orientierung der Querrichtung Q nach außen definiert ist.

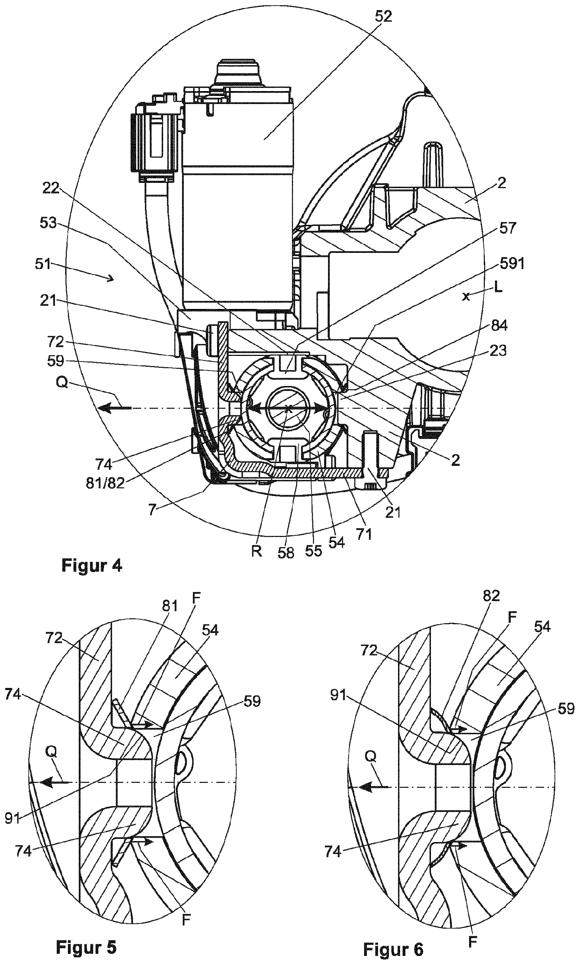

Ein vergrößerter Querschnitt durch die Lenksäule 1 entlang der in Figur 3 eingezeichneten Querrichtung Q ist in Figur 4 dargestellt. Darin ist erkennbar, wie die Antriebseinheit 51 an ihrem Lagerabschnitt 54 mittels eines als Haltebügel 7 ausgebildeten Halteelements an der Außenseite (von der Längsachse L aus gesehen) der Manteleinheit 2 befestigt ist.

Der Haltebügel 7 ist als winkelförmiges Blechformteil ausgebildet, welches einen als Lagerschenkel 71 dienenden ersten Schenkel und einen damit winklig verbundenen Halteschenkel 72 aufweist. Der Lagerschenkel 71 erstreckt sich parallel zur Querrichtung Q und zur Gewindespindelachse R der Gewindespindel 55; der Halteschenkel 72 erstreckt sich senkrecht zur Querrichtung Q und parallel zur Gewindespindelachse R. Der Halteschenkel 72 umgreift den Lagerabschnitt 54 von außen, während der Lagerabschnitt 71 den Lagerabschnitt 54 von unten abstützt. Der Haltebügel 7 ist mittels Befestigungselementen 21, beispielsweise Schrauben, an der Manteleinheit 2 befestigt.

Der Lagerabschnitt 54 weist zwei Gleitstücke 57 und 58 auf, welche bezüglich der Gewindespindelachse R gegenüberliegend angeordnet sind, in der Zeichnung oben und unten am Lagerabschnitt 54. Das Gleitstück 57 liegt an einer Führungsbahn 22 an der Manteleinheit 2 an, das Gleitstück 58 an einer Führungsbahn 73 am Lagerschenkel 71 des Haltebügels 7. Die Führungsbahnen 22 und 73 verlaufen parallel zueinander parallel zur Querrichtung Q und bilden eine Gleitführung für die Gleitstücke 57 und 58. Die Gleitstücke 57, 58 sind als Nietelemente ausgebildet, die den Lagerabschnitt 54 mit dem Getriebegehäuse des Getriebes 53 verbinden. Dadurch wird ein Schiebelager realisiert, in dem der Lagerabschnitt 54 und damit die Antriebseinheit 51 in und entgegen der Querrichtung Q relativ zur Manteleinheit 2 bewegbar gelagert ist, wie dies mit den Pfeilen links und rechts der Gewindespindelachse R angedeutet ist. Durch die querverschiebliche Lagerung ist die erfindungsgemäße Bewegbarkeit der Antriebseinheit 51 realisiert, so dass diese bei einer unerwünschten, jedoch aufgrund von Toleranzen nicht vermeidbaren Abweichung der Parallelität der Gewindespindelachse R zur Längsachse L den dabei auftretenden Winkelversatz durch Ausweichen in Querrichtung Q kompensieren kann. Dadurch werden Zwangszustände und ein Verkanten der Gewindespindel 55 relativ zur Spindelmutter 56 vermieden.

Zur Halterung der Antriebseinheit 51 an der Manteleinheit 2 weist der Lagerabschnitt 54 auf gegenüberliegenden Seiten Haltevertiefungen 59 und 591 auf. In die der Manteleinheit 2 zugewandten Haltevertiefung 591 greift in Querrichtung Q ein an der Manteleinheit 2 ausgebildeter Haltezapfen 23 ein, bevorzugt formschlüssig oder in losem Formschluss. In die gegenüberliegende, von der Manteleinheit 2 nach außen abgewandten, und damit dem Halteschenkel 72 zugewandten Haltevertiefung 59 greift ein, gemäß obiger Definition entgegen der Querrichtung Q nach innen gerichteter Haltevorsprung 74 in eine Haltevertiefung 59 ein, ebenfalls formschlüssig oder in losem Formschluss. Dadurch wird die Antriebseinheit 51 in Längsrichtung bzw. in Richtung der Gewindespindelachse R an der Manteleinheit 2 fixiert. Die Haltevertiefungen 59 und 591 können als zylindrische Bohrungen ausgeführt sein, und die Haltevorsprünge 74 und 23 als dazu korrespondierende zylindrische Zapfen.

Verschiedene Ausführungsformen des Haltevorsprungs 74 sind in den Figuren 5 bis 9 gezeigt, welche jeweils vergrößerte Teilansichten von Figur 4 im Bereich des Halteschenkels 72 des Haltebügels 7 zeigen.

In Figur 5 ist der Haltevorsprung 74 als nach innen entgegen der Querrichtung Q von dem Halteschenkel 72 vorstehender rohrförmiger Abschnitt ausgebildet, der beispielsweise durch eine durch Pressen erzeugte Ausformung des als Blechformteil ausgebildeten Haltebügels 7 ausgestaltet sein kann.

Auf dem Haltevorsprung 74 ist in Figur 5 ein Federelement in Form einer konischen ringförmigen Tellerfeder 81, in Figur 6 in Form einer kalottenartig konvex gerundeten, ringförmigen Tellerfeder 82 angebracht. Die Tellerfeder 81, 82 ist zwischen dem Halteschenkel 72 und dem Lagerabschnitt 54 unter Vorspannung eingesetzt, so dass von dem Halteschenkel 72 des Halteelements 7 als elastische Vorspannkraft eine Federkraft F auf den Lagerabschnitt 54 ausgeübt wird, und entsprechend die Antriebseinheit 51 von zumindest dem Federelement 81 oder 82 federbelastet vorgespannt ist, und zwar entgegen der mit dem Pfeil angedeuteten Querrichtung Q. Diese Richtung korrespondiert mit der Führungs- bzw. Verschieberichtung, die durch das oben beschriebene Schiebelager vorgegeben wird, welches durch die Gleitstücke 57 und 58 sowie die Führungsbahnen 22 und 73 gebildet wird. Durch das Federelement 81 bzw. 82 wird die Antriebseinheit 51 mit der Federkraft F nach innen federnd gegen die Manteleinheit 2 bzw. in Richtung auf die Längsachse L zu angedrückt. Bei einem Winkelversatz zwischen der Längsachse L und der Gewindespindelachse R der Gewindespindel 55 kann der Lagerabschnitt 54 und damit die gesamte Antriebseinheit 51 beim Verstellen in Querrichtung Q gegen die elastische Federkraft des Federelements 81 bzw. 82 ausweichen.

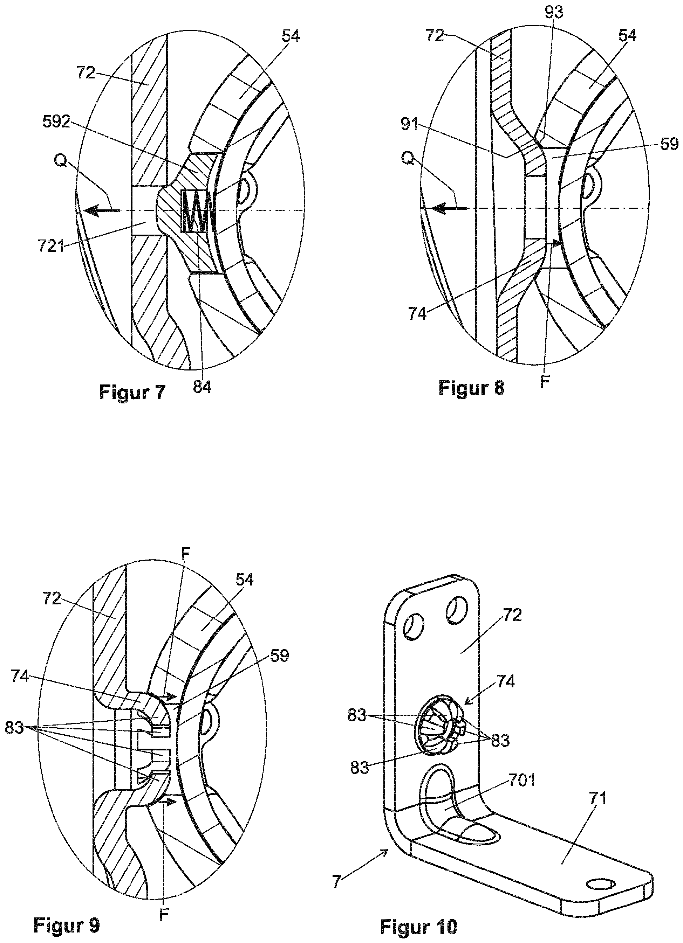

Figur 9 zeigt eine Ausführung, bei welcher der Haltevorsprung 74 in sich federnd ausgebildet ist, durch eine Mehrzahl von radial sternförmig angeordneten, biegeelastischen Federzungen 83, die integral einstückig mit der Wandung des rohrförmigen Haltevorsprungs 74 ausgebildet sind. Auch durch diese Anordnung wird der Lagerabschnitt 54 mit der Federkraft F entgegen der Querrichtung Q elastisch vorgespannt.

Figur 10 zeigt den Haltebügel 7 gemäß Figur 9 mit dem Haltevorsprung 74, der federnde Haltezungen 83 aufweist, in einer perspektivischen Ansicht. Darin ist erkennbar, dass der Haltebügel 7 als einstückiges integrales Blechformteil ausgebildet ist, welches den Einsatz zusätzlicher Federelemente überflüssig macht. Die Haltezungen 83 bestehen aus demselben Material wie der Haltebügel 7, beispielsweise aus Stahl oder Federstahl, und können durch Pressen und Stanzen hergestellt werden. Zur Versteifung der Umbiegung des Haltebügels 7 kann eine Verstärkungssicke 701 vorgesehen sein.

Eine weitere Möglichkeit, den Lagerabschnitt 54 federnd vorzuspannen, ist in Figur 8 gezeigt. Darin ist der Halteschenkel 72 in sich biegeelastisch federnd ausgebildet und übt dadurch selbst die Federkraft F auf den Lagerabschnitt 54 aus.

Eine alternative Möglichkeit ist in Figur 7 gezeigt. Darin weist der Halteschenkel 72 eine Haltevertiefung 721 in Form einer zylindrischen Bohrung auf. An dem Lagerabschnitt 54 ist ein in diese Haltevertiefung 721 eingreifender Haltevorsprung 592 angebracht, der gegen den Lagerabschnitt 54 von einer Feder 84 quer nach außen vorgespannt ist.

In sämtlichen Ausführungen gemäß der Figuren 5 bis 10 wird die Antriebseinheit 51 quer zur Längsachse L gegen die Manteleinheit 2 elastisch vorgespannt. Gegen die dabei ausgeübte Federkraft F kann die Antriebseinheit 51 und damit die Gewindespindel 55 nach außen zum Ausgleich von Toleranzen ausweichen.

Um ein Ausweichen der Antriebseinheit 51 nicht nur quer nach außen, sondern auch entgegengesetzt dazu in Richtung zur Manteleinheit 2 hin zu ermöglichen, kann zwischen dem Lagerabschnitt 54 und der Manteleinheit 2 ein zweites Federelement 84 angeordnet sein, wie in Figur 4 erkennbar ist. Dieses Federelement 84 kann als ringförmige Tellerfeder ausgebildet sein, die auf dem Haltezapfen 23 der Manteleinheit 2 angebracht ist. Der Lagerabschnitt 54 ist dann in und entgegen der Querrichtung Q federnd zwischen diesem zweiten Federelement 84 und dem in der jeweiligen Ausführungsform realisierten Federelement 81, 82 oder 83 beziehungsweise dem in sich federnd ausgebildeten Halteschenkel 72 eingespannt.

Zum Ausgleich eines eventuell durch Toleranzen auftretenden Achsversatzes zwischen dem Haltevorsprung 74 bzw. 592 und dem gegenüberliegenden Haltezapfen 23 kann der Haltevorsprung 74 bzw. 592 an seiner freien Stirnseite einen kugelförmigen oder konischen, konvex abgerundeten Bereich 91 aufweisen, so dass eine Art konischer oder kugelförmiger Gelenkkopf oder Kugelgelenkkopf gebildet wird. Mit dem konvexen Bereich 91 greift der Haltevorsprung 74 bzw. 592 in die zugeordnete Haltevertiefung 59 bzw. 721 ein. In den Ausführungen der Figuren 5 und 6 liegt der konvexe Bereich 91 linienförmig am Rand der Haltevertiefung 59 an; bei der Ausführung gemäß Figur 7 am Rand der Haltevertiefung 721.

Zur Vergrößerung des Auflagebereichs kann am Rand der Haltevertiefung 59 eine konkave Einformung 93 ausgebildet sein, die an den konvexen Bereich 91 am Haltevorsprung 74 angepasst ist zur Bildung einer kugelgelenkartigen Anordnung.

Durch den konvexen Bereich an dem Haltevorsprung 74 bzw. 592 wird im Zusammenwirken mit dem Rand der Haltevertiefung 59 bzw. 721, oder einer am Rand der Haltevertiefung 59 ausgebildeten konkaven Einformung 93 eine Gelenkanordnung gebildet, mit der Achsversatz ausgeglichen werden kann, wodurch die Haltewirkung verbessert wird.

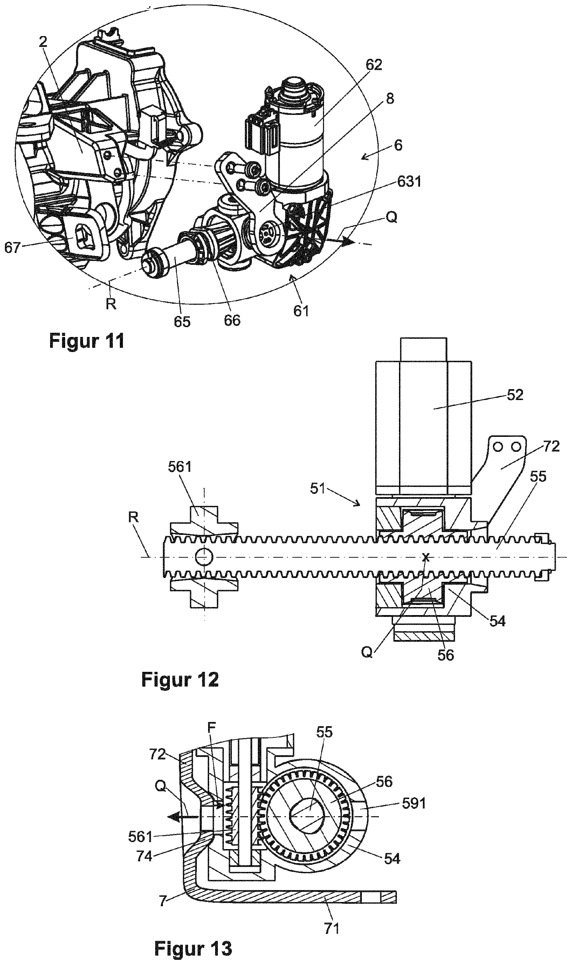

In der Figur 11 ist eine Teilansicht der Lenksäule gemäß Figur 2 in auseinander gezogenem Zustand dargestellt. Die Antriebseinheit 61 der zweiten Verstelleinheit 6 ist an der Manteleinheit 2 durch das Halteelement 8 befestigt, die in einer Explosionsdarstellung schematisch in einer Querrichtung Q bezüglich der Gewindespindelachse R von der Manteleinheit 2 aus nach außen auseinander gezogen dargestellt ist. Die Manteleinheit 2 entspricht dem Bauteil der Lenksäule 1, mit dem die Antriebseinheit 61 verbunden ist. Die Querrichtung Q steht senkrecht zur Gewindespindelachse R, wobei durch den Pfeil in Figur 11 die Orientierung der Querrichtung Q nach außen definiert ist. Das Halteelement 8 ist mit Befestigungsmitteln an der Manteleinheit 2 fixiert. Das Halteelement 8 nimmt einen bolzenförmigen Vorsprung 631 der Antriebseinheit 61 verschwenkbar um eine Achse in Richtung der Querrichtung Q auf. Das Halteelement 8 ist als blattfederförmige Feder ausgebildet, um eine Bewegung der Antriebseinheit 61 in Querrichtung Q quer zur Gewindespindelachse R der Gewindespindel 65 zu gestatten. Alternativ oder zusätzlich können auf dem bolzenförmigen Vorsprung 631 Federelemente vorgesehen sein, die die Antriebseinheit 61 gegen das Halteelement in Richtung der Querrichtung Q vorspannen.

In den Figuren 12 und 13 zeigt eine alternative Ausführungsform der ersten Verstelleinheit 5. Dabei umfasst die Verstelleinheit 5 einen elektrischen Stellmotor 52 und eine Antriebseinheit 51. Das Halteelement 7 zur Verbindung der Antriebseinheit 51 mit der Manteleinheit 2 entspricht jener der Figur 8. Darin ist der Halteschenkel 72 in sich biegeelastisch federnd ausgebildet und übt dadurch selbst die Federkraft F auf den Lagerabschnitt 54 aus. Die Antriebseinheit 51 der Figuren 12 und 13 weist eine in Richtung der Gewindespindelachse R translatorisch verschiebbare Gewindespindel 55 auf. Die Gewindespindel 55 greift in die durch eine Schnecke 561 antreibbares Schneckenrad 56 ein. Durch die Rotation des Schneckenrads 56 wird die Gewindespindel 55 translatorisch in Richtung der Gewindespindelachse R translatorisch bewegt. Die mit der Gewindespindel 55 über das Verbindungsteil 561 verbundene Stelleinheit 4 wird durch die translatorische Bewegung der Gewindespindel 55 relativ zur Trageinheit 3 verstellt. Die in den Figuren 12 und 13 dargestellte alternative Ausführungsform der ersten Verstelleinheit 5 kann in analoger Art und Weise auch auf die zweite Verstelleinheit 6 übertragen werden und ist somit auch zur Realisierung einer Höhenverstellung geeignet.

### Bezugszeichenliste

- 1: Lenksäule
- 2: Manteleinheit
- 21: Befestigungselemente
- 22: Führungsbahn
- 23: Haltezapfen
- 3: Trageinheit
- 31: Schwenkachse
- 32: Befestigungsmittel
- 4: Stelleinheit
- 41: Mantelrohr
- 42: Lenkspindel
- 43: Befestigungsabschnitt
- 5, 6: Verstelleinheit
- 51, 61: Antriebseinheit
- 52, 62: Stellmotor
- 53, 63: Getriebe
- 54: Lagerabschnitt
- 55, 65: Gewindespindel
- 56, 66: Spindelmutter
- 57, 58: Gleitstücke
- 59, 591: Haltevertiefung
- 592: Haltevorsprung
- 67: Stellhebel
- 7: Haltebügel
- 71: Lagerschenkel
- 72: Halteschenkel
- 721: Haltevertiefung
- 73: Führungsbahn
- 74: Haltevorsprung
- 81, 82: Tellerfeder
- 83: Federzunge
- 91: konvexer Bereich
- 93: konkave Einformung

- L: Längsachse
- H: Höhenrichtung
- Q: Querrichtung
- F: Federkraft

## Patentansprüche

1. Motorisch verstellbare Lenksäule (1) für ein Kraftfahrzeug, umfassend eine Trageinheit (3), die an einer Fahrzeugkarosserie anbringbar ist, und von der eine Stelleinheit (4) gehalten ist, in der eine Lenkspindel (42) um eine Längsachse (L) drehbar gelagert ist,
und mit einem Verstellantrieb (5), der mit der Trageinheit (3) und mit der Stelleinheit (4) verbunden ist, und von dem die Stelleinheit (4) relativ zur Trageinheit (3) verstellbar ist, wobei der Verstellantrieb (5) eine Antriebseinheit (51) und eine in eine Spindelmutter (56) eingreifende Gewindespindel (55) mit einer Gewindespindelachse (R) aufweist, wobei die Gewindespindel (55) durch die Antriebseinheit (51) rotatorisch oder translatorisch antreibbar ist, wobei die Antriebseinheit (51) mit einem Bauteil (2, 3, 4) der Lenksäule (1), das gebildet wird durch die Trageinheit (3), die Stelleinheit (4) oder eine die Stelleinheit (4) haltende und mit der Trageinheit (3) verbundene Manteleinheit (2), in einer Querrichtung (Q) quer zur Gewindespindelachse (R) bewegbar verbunden ist, **dadurch gekennzeichnet,**
**dass** die Antriebseinheit (51) relativ zu dem Bauteil (2, 3, 4) im Wesentlichen senkrecht quer zur Gewindespindelachse (R ) und quer zur Längsachse (L) linear verschiebbar ist.

2. Motorisch verstellbare Lenksäule (1) für ein Kraftfahrzeug, umfassend eine Trageinheit (3), die an einer Fahrzeugkarosserie anbringbar ist, und von der eine Stelleinheit (4) gehalten ist, in der eine Lenkspindel (42) um eine Längsachse (L) drehbar gelagert ist,
und mit einem Verstellantrieb (5), der mit der Trageinheit (3) und mit der Stelleinheit (4) verbunden ist, und von dem die Stelleinheit (4) relativ zur Trageinheit (3) verstellbar ist, wobei der Verstellantrieb (5) eine Antriebseinheit (51) und eine in eine Spindelmutter (56) eingreifende Gewindespindel (55) mit einer Gewindespindelachse (R) aufweist, wobei die Gewindespindel (55) durch die Antriebseinheit (51) rotatorisch oder translatorisch antreibbar ist,
wobei die Antriebseinheit (51) mit einem Bauteil (2, 3, 4) der Lenksäule (1), das gebildet wird durch die Trageinheit (3), die Stelleinheit (4) oder eine die Stelleinheit (4) haltende und mit der Trageinheit (3) verbundene Manteleinheit (2), um eine in Querrichtung (Q) liegende Achse verschwenkbar verbunden ist, **dadurch gekennzeichnet,**
**dass** die Antriebseinheit (51) relativ zu dem Bauteil (2, 3, 4) im Wesentlichen senkrecht quer zur Gewindespindelachse (R ) und quer zur Längsachse (L) linear verschiebbar ist.

3. Lenksäule nach einem der vorangehenden Ansprüche, **dadurch gekennzeichnet, dass** die Antriebseinheit (51, 61) von zumindest einem Federelement (81, 82, 83, 84) federbelastet vorgespannt ist.

4. Lenksäule nach einem der vorangehenden Ansprüche, **dadurch gekennzeichnet, dass** an dem Bauteil (2, 3, 4) ein Halteelement (7, 8) angeordnet ist, an dem die Antriebseinheit (51) zumindest in Querrichtung (Q) abgestützt ist.

5. Lenksäule nach Anspruch 4, **dadurch gekennzeichnet, dass** zwischen dem Halteelement (7, 8) und der Antriebseinheit (51, 61) und/oder zwischen der Antriebseinheit (51, 61) und dem Bauteil (2, 3, 4) mindestens ein Federelement (81, 82, 83, 84) angeordnet ist.

6. Lenksäule nach Anspruch 4 oder 5, **dadurch gekennzeichnet, dass** das Halteelement (7) als federelastischer Haltebügel (7) ausgebildet ist.

7. Lenksäule nach einem der Ansprüche 4 bis 6, **dadurch gekennzeichnet, dass** das Halteelement (7) und/oder das Bauteil (2, 3, 4) einen Haltevorsprung (74, 23) aufweist, der in eine Haltevertiefung (59, 591) der Antriebseinheit (51) eingreift.

8. Lenksäule nach Anspruch 7, **dadurch gekennzeichnet, dass** ein ringförmiges Federelement (81, 82) auf dem Haltevorsprung (74, 23) angeordnet ist.

9. Lenksäule nach einem der Ansprüche 7 bis 8, **dadurch gekennzeichnet, dass** der Haltevorsprung (74) federnd ausgebildet ist.

10. Lenksäule nach einem der Ansprüche 7 bis 9, **dadurch gekennzeichnet, dass** an der Antriebseinheit (51) mindestens ein Haltevorsprung (592) angeordnet ist.

11. Lenksäule nach einem der Ansprüche 7 bis 10, **dadurch gekennzeichnet, dass** der Haltevorsprung (74, 592, 23) konvex gerundet ausgebildet ist.

12. Lenksäule nach einem der Ansprüche 4 bis 11, **dadurch gekennzeichnet, dass** das Halteelement (7, 8) als Blechformteil ausgebildet ist.

13. Lenksäule nach einem der Ansprüche 4 bis 12, **dadurch gekennzeichnet, dass** die in Querrichtung (Q) liegende Achse durch das Halteelement (7, 8) und/oder den Haltevorsprung (74, 592, 23) verläuft.

## Claims

1. A motor-adjustable steering column (1) for a motor vehicle, comprising a support unit (3), which can be mounted on a vehicle body, and by which an actuator unit (4) is held, in which a steering spindle (42) is rotatably mounted about a longitudinal axis (L),
and having an adjusting drive (5), which is connected to the support unit (3) and to the actuator unit (4), and by which the actuator unit (4) can be adjusted relative to the support unit (3), wherein the adjusting drive (5) comprises a drive unit (51) and a threaded spindle (55) engaging in a spindle nut (56) and having a threaded spindle axis (R), wherein the threaded spindle (55) can be driven in rotation or in translation by the drive unit (51), wherein the drive unit (51) is connected to a component (2, 3, 4) of the steering column (1) which is formed by the support unit (3), the actuator unit (4) or a casing unit (2) holding the actuator unit (4) and connected to the support unit (3), such that it is movable in a transverse direction (Q) transversely to the threaded spindle axis (R)
**characterized**
**in that** the drive unit (51) is displaceable in linear manner relative to the component (2, 3, 4) substantially transversely to the threaded spindle axis (R) and transversely to the longitudinal axis (L).

2. A motor-adjustable steering column (1) for a motor vehicle, comprising a support unit (3), which can be mounted on a vehicle body, and by which an actuator unit (4) is held, in which a steering spindle (42) is rotatably mounted about a longitudinal axis (L),
and having an adjusting drive (5), which is connected to the support unit (3) and to the actuator unit (4), and by which the actuator unit (4) can be adjusted relative to the support unit (3), wherein the adjusting drive (5) comprises a drive unit (51) and a threaded spindle (55) engaging in a spindle nut (56) and having a threaded spindle axis (R), wherein the threaded spindle (55) can be driven in rotation or in translation by the drive unit (51), wherein the drive unit (51) is connected to a component (2, 3, 4) of the steering column (1) which is formed by the support unit (3), the actuator unit (4) or a casing unit (2) holding the actuator unit (4) and connected to the support unit (3), such that it can swivel about an axis lying in a transverse direction (Q).
**characterized**
**in that** the drive unit (51) is displaceable in linear manner relative to the component (2, 3, 4) substantially transversely to the threaded spindle axis (R) and transversely to the longitudinal axis (L).

3. The steering column as claimed in one of the preceding claims, **characterized in that** the drive unit (51, 61) is spring-loaded by at least one spring element (81, 82, 83, 84).

4. The steering column as claimed in one of the preceding claims, **characterized in that** a holding element (7, 8) is arranged on the component (2, 3, 4), against which element the drive unit (51) is braced at least in the transverse direction (Q).

5. The steering column as claimed in claim 4, **characterized in that** at least one spring element (81, 82, 83, 84) is arranged between the holding element (7, 8) and the drive unit (51, 61) and/or between the drive unit (51, 61) and the component (2, 3, 4).

6. The steering column as claimed in claim 4 or 5, **characterized in that** the holding element (7) is configured as a spring-elastic holding bracket (7).

7. The steering column as claimed in one of claims 4 to 6, **characterized in that** the holding element (7) and/or the component (2, 3, 4) comprises a holding protrusion (74, 23) which engages with a holding recess (59, 591) of the drive unit (51).

8. The steering column as claimed in claim 7, **characterized in that** a ring-shaped spring element (81, 82) is arranged on the holding protrusion (74, 23).

9. The steering column as claimed in one of claims 7 to 8, **characterized in that** the holding protrusion (74) is resilient.

10. The steering column as claimed in one of claims 7 to 9, **characterized in that** at least one holding protrusion (592) is arranged on the drive unit (51).

11. The steering column as claimed in one of claims 7 to 10, **characterized in that** the holding protrusion (74, 592, 23) is convex rounded.

12. The steering column as claimed in one of claims 4 to 11, **characterized in that** the holding element (7, 8) is a sheet metal part.

13. The steering column as claimed in one of claims 4 to 12, **characterized in that** the axis lying in the transverse direction (Q) extends through the holding element (7, 8) and/or the holding protrusion (74, 592, 23).

## Revendications

1. Colonne de direction (1), ajustable par moteur, destinée à un véhicule automobile, ladite colonne de direction comprenant une unité de support (3) qui peut être fixée à une carrosserie de véhicule et qui supporte une unité de réglage (4) dans laquelle un axe de direction (42) est monté de manière rotative sur un axe longitudinal (L),
et comprenant un entraînement d'ajustement (5) qui est relié à l'unité de support (3) et à l'unité de réglage (4) et qui permet d'ajuster l'unité de réglage (4) par rapport à l'unité de support (3), l'entraînement d'ajustement (5) comportant une unité d'entraînement (51) et une broche filetée (55) qui s'engage dans un écrou de broche (56) et qui comporte un axe de broche filetée (R), la broche filetée (55) pouvant être entraînée en rotation ou en translation par l'unité d'entraînement (51), l'unité d'entraînement (51) étant reliée de manière mobile dans une direction transversale (Q), transversalement à l'axe de broche filetée (R), à un composant (2, 3, 4) de la colonne de direction (1) qui est formé par l'unité de support (3), l'unité de réglage (4) ou une unité d'enveloppe (2), supportant l'unité de réglage (4) et reliée à l'unité de support (3),
**caractérisée en ce que**
l'unité d'entraînement (51) peut coulisser linéairement par rapport au composant (2, 3, 4) et, de manière sensiblement perpendiculaire, transversalement à l'axe de broche filetée (R) et transversalement à l'axe longitudinal (L).

2. Colonne de direction (1), ajustable par moteur, destinée à un véhicule automobile, ladite colonne de direction comprenant une unité de support (3) qui peut être fixée à une carrosserie de véhicule et qui supporte une unité de réglage (4) dans laquelle un axe de direction (42) est monté de manière rotative sur un axe longitudinal (L),
et comprenant un entraînement d'ajustement (5) qui est relié à l'unité de support (3) et à l'unité de réglage (4) et qui permet d'ajuster l'unité de réglage (4) par rapport à l'unité de support (3), l'entraînement d'ajustement (5) comportant une unité d'entraînement (51) et une broche filetée (55) qui s'engage dans un écrou de broche (56) et qui comporte un axe de broche filetée (R), la broche filetée (55) pouvant être entraînée en rotation ou en translation par l'unité d'entraînement (51), l'unité d'entraînement (51) étant reliée de manière pivotante sur un axe, situé dans la direction transversale (Q), à un composant (2, 3, 4) de la colonne de direction (1), qui est formé par l'unité de support (3), l'unité de réglage (4) ou une unité d'enveloppe (2), supportant l'unité de réglage (4) et reliée à l'unité de support (3), **caractérisée en ce que**
l'unité d'entraînement (51) peut coulisser linéairement par rapport au composant (2, 3, 4), de manière sensiblement perpendiculaire, transversalement à l'axe de broche filetée (R) et transversalement à l'axe longitudinal (L).

3. Colonne de direction selon l'une des revendications précédentes, **caractérisée en ce que** l'unité d'entraînement (51, 61) est précontrainte par au moins un élément à ressort (81, 82, 83, 84).

4. Colonne de direction selon l'une des revendications précédentes, **caractérisée en ce qu'**un élément de support (7, 8), sur lequel l'unité d'entraînement (51) prend appui au moins dans le direction transversale (Q), est disposé sur le composant (2, 3, 4).

5. Colonne de direction selon la revendication 4, **caractérisée en ce qu'**au moins un élément à ressort (81, 82, 83, 84) est disposé entre l'élément de support (7, 8) et l'unité d'entraînement (51, 61) et/ou entre l'unité d'entraînement (51, 61) et le composant (2, 3, 4).

6. Colonne de direction selon la revendication 4 ou 5, **caractérisée en ce que** l'élément de support (7) est réalisé sous la forme d'un étrier de support élastique (7) .

7. Colonne de direction selon l'une des revendications 4 à 6, **caractérisée en ce que** l'élément de support (7) et/ou le composant (2, 3, 4) comporte une saillie de support (74, 23) qui s'engage dans une cavité de support (59, 591) de l'unité d'entraînement (51).

8. Colonne de direction selon la revendication 7, **caractérisée en ce qu'**un élément à ressort annulaire (81, 82) est disposé sur la saillie de support (74, 23).

9. Colonne de direction selon l'une des revendications 7 à 8, **caractérisée en ce que** la saillie de support (74) est élastique.

10. Colonne de direction selon l'une des revendications 7 à 9, **caractérisée en ce qu'**au moins une saillie de support (592) est disposée sur l'unité d'entraînement (51) .

11. Colonne de direction selon l'une des revendications 7 à 10, **caractérisée en ce que** la saillie de support (74, 592, 23) est arrondie de manière convexe.

12. Colonne de direction selon l'une des revendications 4 à 11, **caractérisée en ce que** l'élément de support (7, 8) est réalisé sous la forme d'une pièce en tôle profilée.

13. Colonne de direction selon l'une des revendications 4 à 12, **caractérisée en ce que** l'axe situé dans la direction transversale (Q) s'étend à travers l'élément de support (7, 8) et/ou la saillie de support (74, 592, 23) .
